# EUROPEAN PATENT SPECIFICATION

(11) **EP 1 972 490 B1**
(45) Date of publication and mention of the grant of the patent: **14.10.2009**
(21) Application number: 07425164.6
(22) Date of filing: 21.03.2007
(51) Int. Cl.: B60N 2/36, B60N 2/30

(54) **Motor vehicle with a second-row seat having a backrest and sitting surface that can both be tipped over**
Kraftfahrzeug mit einem Rücksitz mit Rücklehne und Sitzfläche, die beide umklappbar sind
Véhicule motorisé avec une siège de deuxième rang doté d'un dossier et d'une surface d'assise pouvant être tous deux renversés

(43) Date of publication of application: 24.09.2008
(73) Proprietor: C.R.F. Società Consortile per Azioni, 10043 Orbassano (Torino) (IT)
(72) Inventor: Demontis, Salvatore, 10043 Orbassano (IT)
(74) Representative: Bergadano, Mirko

(56) References cited:
- EP-A- 0 069 645
- FR-A- 2 868 997
- JP-A- 7 257 256

## Description

The present invention relates to a motor vehicle with a second-row seat, having a backrest and sitting surface that can both be tipped over.

In motor vehicles having a second row of seats behind that of the driver, there is felt the need to be able to knock down the backrest of said seats in order to create a resting surface for the luggage, in general contiguous to that of the usual rear luggage compartment. Different types of seats are known with backrests that can be knocked down. In a known type, the sitting surface is fixed and the backrest is simply hinged with respect to the sitting surface. On account of the conformation of the sitting surface, this type of seat presents the drawback that folding of the backrest is limited and, given that the backrest remains inclined, it is not able to form an efficient resting surface for the luggage.

Other types of seats have been proposed with backrests that can be knocked down in which also the sitting surface can be displaced so as to enable the backrest to set its rear wall in a substantially horizontal position. In one of these types of seats known from document FR 2868997, the sitting surface can be tipped up forwards about a hinge adjacent to its front edge so as to set itself vertically against the front seat to enable the backrest to occupy the space of the sitting surface. This seat presents the drawback of limiting the resting surface for the luggage to just the rear wall of the backrest.

In document DE 10354272 there has also been proposed a second-row seat in which the sitting surface is connected at the front to a fixed base via a pair of levers, which are turned so as to lower the front part of the sitting surface itself before knocking the corresponding backrest down thereon. The rear part of the sitting surface is in turn connected to the backrest by means of a complicated mechanism that comprises a pair of plates connected to the base by means of an articulated quadrilateral. Also in this case the resting surface remains limited to just the rear wall of the backrest.

From document JP 07257256, which discloses all the features of the preamble of claim 1 and is considered to be the closest prior art, it is known a second-row seat for a motor vehicle, where the second-row seat is provided with a backrest pivoted on stationary hinge brackets to form a resting surface, and with a seat cushion rotatably supported by the vehicle floor through other hinges. The seat cushion is formed by a front cushion part and a rear cushion part, which are mutually connected by pairs of mutually hinged arms to form a prolongation of the resting surface.

The aim of the invention is to provide a second-row seat, which has a backrest and sitting surface that can both be tipped over and is designed to form an ample resting surface, which will also be convenient to operate and simple to produce.

According to the invention, the above aim is achieved by a motor vehicle with a second-row seat having a backrest and sitting surface that can be tipped over, as defined in Claim 1.

For a better understanding of the invention, described herein is a preferred embodiment, provided by way of example, with the aid of the annexed drawings, in which:
Figure 1 is a schematic lateral section of a second-row seat according to the invention, with backrest and sitting surface that can be tipped over;
Figure 2 is a detail of Figure 1, at an enlarged scale;
Figure 3 is the lateral section of the seat of Figure 1 in an intermediate operating position;
Figure 4 is the lateral section of the seat of Figure 1, with the sitting surface and the backrest tipped over.

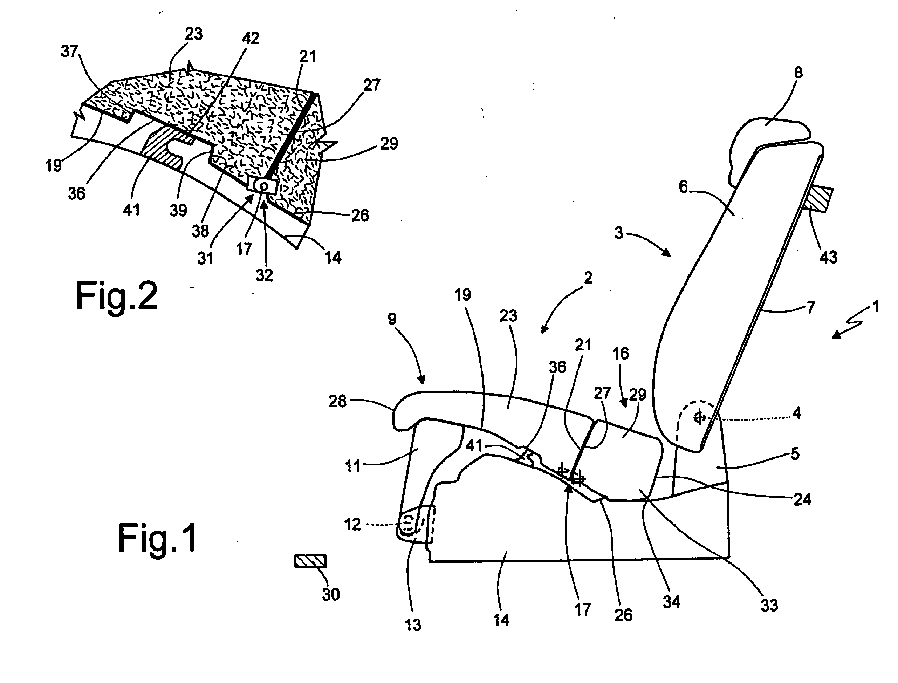

With reference to Figure 1, designated as a whole by 1 is a second-row seat of a motor vehicle, in particular a car. The seat 1 comprises a sitting surface 2 and a backrest 3. In the ensuing description, by the term "sitting surface" is meant the substantially horizontal part of the seat on which the user sits, whilst by the term "backrest" is meant the part of the seat, normally in a sub-vertical position, on which the user rests his shoulders in use.

Hereinafter the terms "front", "rear", "transverse" and "longitudinal" refer to the direction in which the motor vehicle is travelling. The term "hinge" indicates any articulated joint, irrespective of whether it is formed by a single segment or by a number of aligned segments. In cars, the second-row seat is in general also the rear seat. In other types of motor vehicles, the second-row seat can be either a rear one or any intermediate seat between that of the driver and the rear seat. In any case, the second-row seat can be single for two or three passengers or else divided into two or three segments. In the annexed drawings, a rear seat 1 is represented for just one passenger.

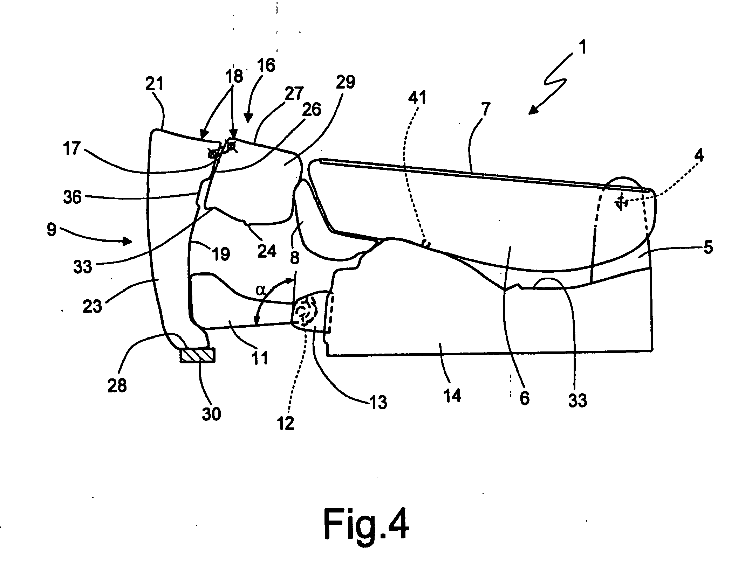

The backrest 3 is pivoted, by means of a first fixed hinge 4, on two fixed supports 5 of the passenger compartment of the motor vehicle (not indicated in the drawings). The backrest 3 comprises a rigid frame, which is in itself known, a stuffed cushion 6 for resting of the user's back, and a rear surface, formed by a substantially plane rigid plate 7. When the backrest 3 is knocked down as in Figure 4, the plate 7 constitutes a resting surface for the luggage that can be set as a continuation of the plane of the usual luggage compartment of the car. Advantageously, the plate 7 can be coated at the rear with a material suitable for loading and unloading luggage. The backrest 3 is finally provided with a headrest cushion 8, which can be height adjusted in any known way.

The sitting surface 2 of the seat 1 has a front portion 9 (Figure 1), fixed with respect to a rigid structure, which is preferably formed by two levers 11 fixed to the two sides of the portion 9 itself, on the corresponding rigid frame. The bottom end of each lever 11 is pivoted on a corresponding fixed hinge 12, which is set on a bracket 13 fixed on a fixed base or floor panel 14 of the car.

According to the invention, the sitting surface 2 moreover comprises a rear portion 16 having a rigid frame of its own, separated from that of the front portion 9. The rigid frames of the two portions 9 and 16 of the sitting surface 2 are hinged together by means of a transverse mobile hinge 17. The sitting surface 2 is hence foldable on the hinge 17 so as to form a prolongation 18 (Figure 4) of the resting surface formed by the plate 7.

In particular, the fixed frame of the front portion 9 of the sitting surface 2 comprises a bottom surface 19 (Figures 1 and 2) and a corresponding rear transverse surface 21, which are formed by a single shaped rigid plate, set on which is a corresponding stuffed cushion 23. The rigid frame of the rear portion 16 comprises a rear surface 24, a bottom surface 26, and a front transverse surface 27, which are formed by another shaped rigid plate, set on which is another stuffed cushion 29.

The mobile hinge 17 is set in a position corresponding to the two bottom surfaces 19 and 26 of the two portions 9 and 16, in particular between a corner edge 31 of the bottom surface 19 with the corresponding transverse surface 21 and a corner edge 32 of the bottom surface 26 with the corresponding transverse surface 27. The two transverse surfaces 21 and 27 are plane and are designed to come into contact with one another in the distended position of the sitting surface 2, indicated in Figure 1.

The two transverse surfaces 21 and 27 are substantially perpendicular each to a portion of the corresponding bottom surface 19, 26 adjacent to the respective corner edge 31, 32. The prolongation 18 of the resting surface formed by the plate 7 is constituted by the two transverse surfaces 21 and 27 of the portions 9 and 16 when the sitting surface is in the folded position of Figure 4. Consequently, the rear portion 16 is designed to rotate 9 on the mobile hinge 17 through 180° with respect to the front portion. Advantageously, the two transverse surfaces 21 and 27 can be coated with a material suitable for supporting the luggage, the same as or similar to that of the rear plate 7 of the backrest 3.

The two levers 11 are designed to rotate on the hinge 12 through an angle α substantially of 90° until a front edge 28 of the stuffed cushion 23 comes to stop against a fixed arrest 30 of the passenger compartment of the motor vehicle. The length of the two levers 11 is sized according to the height of the backrest 3 and the width of the two transverse surfaces 21 and 27 of the portions 9 and 16 so that, in the folded position of Figure 4, the prolongation 18 will set itself in a position adjacent to the resting surface formed by the plate 7. In said position, with the headrest cushion 8 in a retracted position, the rear portion 16 of the sitting surface 2 sets itself with a part of its bottom surface 26 in contact with a corresponding part of the bottom surface 19 of the front portion 9, whilst its stuffed cushion 29 sets itself in contact with the headrest cushion 8.

At least one of said bottom surfaces 19 and 26 of the portions 9 and 16 of the sitting surface 2 is designed to stop against a fixed arrest carried by said base or floor panel 14 when said sitting surface 2 is in the distended position. In particular, the bottom surface 26 of the rear portion 16 comprises a plane area 33 designed to stop against a corresponding plane area 34 when the sitting surface 2 is in the distended position of Figure 1. In said position, the two transverse surfaces 21 and 27 are also in contact with one another so that the plane area 34 also determines the longitudinal arrest of the sitting surface 2 backwards.

Finally, the bottom surface 19 of the front portion 9 of the sitting surface presents a transverse depression 36 (Figure 2), formed by a front shoulder 37 and by a rear shoulder 38, which is provided with a transverse notch 39. In turn, the floor panel 14 is provided with a transverse bar 41 having a border 42 projecting backwards and designed to engage the notch 39. Advantageously, in the distended position of the sitting surface 2, the bottom wall of the depression 36 rests against the outer edge of the border 42, preventing forcing of the two transverse surfaces 21 and 27 under the weight of the passenger.

With the sitting surface 2 in the distended position of Figure 1, the transverse bar 41 and the border 42 are housed in the depression 36, with the border 42 facing the notch 39. In the event of sharp arrest of the motor vehicle, or in the event of a head-on collision, the sitting surface 2 tends to shift forwards and brings the notch 39 to engage the border 42, preventing both further displacement forwards of the sitting surface 2 and rotation of the portion 9 about the hinge 12 and of the rear portion 16 about the mobile hinge 17.

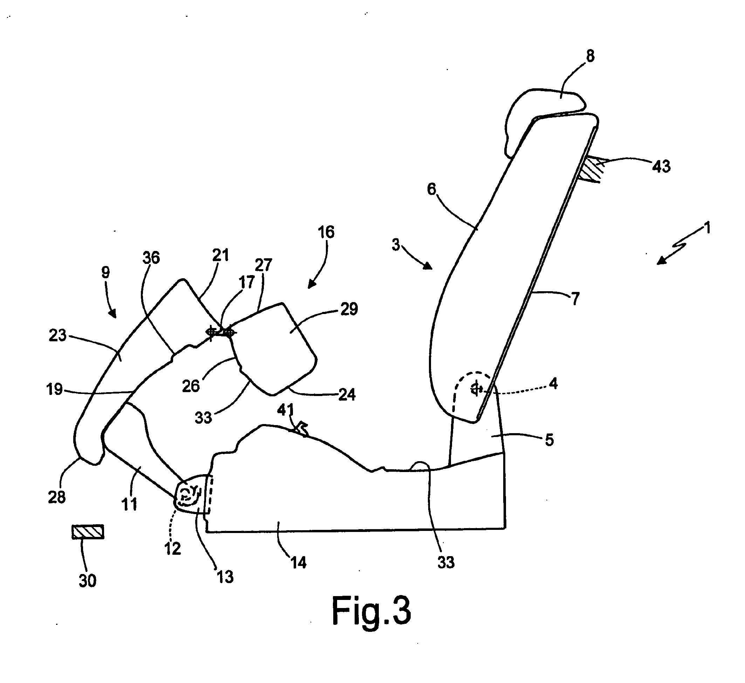

The upright position of the backrest 3 (Figure 1) is defined by the arrest, for example of the corresponding rear plate 7 against a fixed shoulder 43 of the passenger compartment of the motor vehicle, indicated only schematically in Figure 1, on which the backrest 3 can be blocked by means of a lock, in itself known and not represented. To fold the sitting surface 2 and tip over the backrest 3 and the sitting surface 2, first the headrest cushion 8 is brought into the retracted position indicated in Figure 1. Then, the sitting surface 2 is rotated together with the levers 11 about the fixed hinge 12 in the counter-clockwise direction, and at the same time the rear portion 16 of the sitting surface 2 is rotated about the mobile hinge 17 in the clockwise direction, bringing the sitting surface 2 into the intermediate position indicated in Figure 3.

The rotation of the sitting surface 2 about the fixed hinge 12 is now continued until the edge 28 of the front portion 9 comes to stop against the fixed arrest 30. Furthermore, the rotation of the rear portion 16 about the mobile hinge 17 is continued until its transverse surface 27 stops against the transverse surface 21 of the front portion 9, as indicated in Figure 4. Finally, the backrest 3 is tipped over about the fixed hinge 4, until the corresponding cushion 6 remains against the floor panel 14 and the headrest cushion 8 is fixed against the cushion 29 of the rear portion 16 of the sitting surface 2. Then, the rigid plate 7 of the backrest 3 is brought flush with the transverse surfaces 21 and 27 of the portions 9 and 16 of the sitting surface 2, as indicated in Figure 4.

To bring the backrest 3 back into the upright position and the sitting surface 2 into the distended position of Figure 1, it is sufficient to carry out the manoeuvres listed above in reverse order.

From what has been seen above, the advantages of the second-row seat according to the invention as compared to the seats of the known art are evident. First of all, the prolongation 18 of the resting surface formed by the rigid plate 7 increases considerably the space available for the luggage. Furthermore, the manoeuvre of tipping forwards and folding the sitting surface 2 is independent of that of tipping down the backrest 3. Finally, in the event of sharp arrest of the motor vehicle, the bar 41 prevents any longitudinal displacement and tipping forwards of the sitting surface 2, preventing possible traumas for the passenger.

It is understood that various modifications and improvements can be made to the second-row seat described above, without departing from the scope of the claims. For example, the two levers 11 can be replaced by a continuous transverse structure. Furthermore, the two portions 9 and 16 of the sitting surface 2 can be equipped with manual grips for facilitating rotation of folding and distension of the sitting surface 2. Finally, the bottom surface 26 of the rear portion 16 can present a depression similar to the depression 36 of the bottom surface 19, which is designed to co-operate with a transverse bar of the floor panel 14 similar to the bar 41. In this case, the displacements forwards of the rear portion 16 of the sitting surface 2 in the event of sharp arrest of the motor vehicle are blocked independently of those of the front portion 9.

## Claims

1. A motor vehicle with a second-row seat (1) having a backrest (3) and a sitting surface (2) that can both be tipped over, wherein said backrest (3) is designed to be tipped down about a first fixed hinge (4) to form a resting surface (7), said first fixed hinge (4) being carried on two supports (5) of the passenger compartment of the motor vehicle; and in
wherein said sitting surface (2) comprises a front portion (9) and a rear portion (16), said sitting surface (2) being designed to be tipped from a distended position forwards about a second hinge (12) also carried by said base (13,14) and set in a position corresponding to said front portion (9); said front portion (9) and said rear portion (16) being hinged together on a mobile hinge (17) to enable said sitting surface (2) to be folded to form a prolongation (18) of said resting surface (7) when tipped; **characterized in that** at least one (9) of said portions (9, 16) presents a depression (36) adapted to house an element (41, 42) secured to said base (14), said depression (36) extending transversely and comprising a rear shoulder (38) provided with a notch (39), said element (41, 42) being constituted by a transverse bar (41) having a border (42) projecting backwards and designed to engage said notch (39) in order to prevent both a rotational and a longitudinal displacement of said sitting surface (2) in the event of sharp arrest of the motor vehicle.

2. The vehicle with a second-row seat according to Claim 1,
wherein the bottom surface of said depression (36) is designed to stop vertically against said border (42) of said transverse bar (41) when said sitting surface (2) is in said distended position.

3. The vehicle with a second-row seat according to Claim 1 or 2, wherein said portions (9, 16) have corresponding bottom surfaces (19, 26), the bottom surface (19) of at least one (9) of said portions (9, 16) being provided with said depression (36), said mobile hinge (17) being set in a position corresponding to said bottom surfaces (19, 26).

4. The vehicle with a second-row seat according to Claim 3, wherein said prolongation (18) of the resting surface (7) is constituted by two transverse surfaces (21, 27), each carried by one of said portions (9, 16), said mobile hinge (17) being set in a position to two corner edges (31, 32), each formed by the bottom surface (19, 26) and by the transverse surface (21, 27) of of said portions (9, 16).

5. The vehicle with a second-row seat according to Claim 4, wherein said front portion (9) is fixed with respect to a rigid structure (11), and said second fixed hinge (12) is set between said rigid structure (11) and said base (13, 14), **characterized in that** said transverse surfaces (21, 27) are designed to mate together and are substantially perpendicular to said bottom surfaces (19, 26), said rear portion (16) being designed to rotate about said mobile hinge (17) through 180° with respect to said front portion (9).

6. The vehicle with a second-row seat according two Claim 5, wherein said rigid structure (11) is sized according to the height of said backrest (3) and the of transverse surfaces (21, 27) so as to enable said prolongation (18) to set itself adjacent to resting surface (7), said rigid structure being designed two rotate on said second hinge (12) substantially through an angle (α) of 90°, a fixed arrest (30) being provided for arresting said front portion (9) when said sitting surface (2) is in the folded position.

## Patentansprüche

1. Kraftfahrzeug mit einem Zweitreihensitz (1) mit einer Rückenlehne (3) und einer Sitzfläche (2), die beide verschwenkt werden können, wobei die Rückenlehne (3) ausgelegt ist um bezüglich eines ersten feststehenden Gelenkes (4) verschwenkt zu werden, um eine Auflagefläche (7) zu bilden, wobei das erste feststehende Gelenk (4) an zwei Stützen (5) des Insassenraumes des Kraftfahrzeuges gehalten ist; wobei die Sitzfläche (2) einen Frontabschnitt (9) und einen Eckabschnitt (16) umfasst, wobei die Sitzfläche (2) ausgelegt ist um von einer ausgefahrenen Position vorwärtig verschwenkt zu werden bezüglich eines zweiten Gelenkes (12), welches ebenfalls von der Basis (13, 14) gehalten wird, und zwar eingestellt in einer Position entsprechend dem Frontabschnitt (9); wobei der Frontabschnitt (9) und der Heckabschnitt (16) gelenkig miteinander verbunden sind durch ein bewegliches Gelenk (17), um es der Sitzfläche (2) zu ermöglichen geschwenkt zu werden, um einen Fortsatz (18) der Auflagefläche (7), wenn verschwenkt zu bilden, **dadurch gekennzeichnet, das** zumindest einer (9) der Abschnitte (9, 16) eine Absenkung (36) aufweist, ausgelegt zum Aufnehmen eines Elementes (41, 42), welches an der Basis (14) befestigt ist, wobei die Absenkung (36) sich transversal erstreckt und einen Heckabsatz (38) umfasst, der mit einer Kerbe (39) bereitgestellt ist, wobei das Element (41, 42) durch eine Querstrebe (41) gebildet ist, einen Rand (42) aufweisend, der rückwärtig vorspringt und ausgelegt ist zum Eingreifen bezüglich der Kerbe (39) um sowohl eine Rotationsbewegung als auch eine longitudinale Versetzung der Sitzfläche (2) im Falle einer starken Verzögerung des Kraftfahrzeuges zu verhindern.

2. Fahrzeug mit einem Zweitreihensitz nach Anspruch 1, bei welchem die Bodenfläche der Absenkung (36) ausgelegt ist um vertikal anzuliegen gegen den Rand (42) der Querstrebe (41) wenn die Sitzfläche (2) in der ausgefahrenen Position vorliegt.

3. Fahrzeug mit einem Zweitreihensitz nach Anspruch 1 oder 2, bei welchem die Abschnitte (9, 16) entsprechende Bodenflächen (19, 26) aufweisen, wobei die Bodenfläche (19) von zumindest einem (9) der Abschnitte (9, 16) bereitgestellt ist mit der Absenkung (36), wobei das bewegliche Gelenk (17) in eine Position eingestellt ist entsprechend der Bodenflächen (19, 26).

4. Fahrzeug mit einem Zweitreihensitz nach Anspruch 3, bei welchem der Fortsatz (18) der Auflagefläche (7) gebildet ist durch zwei Querflächen (21, 27), jeweils gehalten durch einen der Abschnitte (9, 16), wobei das bewegliche Gelenk (17) eingestellt ist auf eine Position entsprechend zweier Eckkanten (31, 32), jeweils gebildet durch die Bodenfläche (19, 26) und durch die Querfläche (21, 27) von jedem der Abschnitte (9, 16).

5. Fahrzeug mit einem Zweitreihensitz nach Anspruch 4, bei welchem der Frontabschnitt (9) festgelegt ist mit Bezug auf eine starre Struktur (11), wobei das zweite feststehende Gelenk (12) eingestellt ist zwischen die starre Struktur (11) und die Basis (13, 14), **dadurch gekennzeichnet, dass** die Querflächen (21, 27) ausgelegt sind um zueinander zu passen und im Wesentlichen senkrecht vorliegen zu den Bodenflächen (19, 26), wobei der Heckabschnitt (16) ausgelegt ist um sich bezüglich des beweglichen Gelenkes (17) zu drehen um 180^{°} mit Bezug auf den Frontabschnitt (9).

6. Fahrzeug mit einem Zweitreihensitz nach Anspruch 5, bei welchem die starre Struktur (11) bemessen ist entsprechend der Höhe der Rückenlehne (3) und der Bereite der Querflächen (21, 27), um es dem Fortsatz (18) zu ermöglichen sich selbst einzustellen benachbart der Auflagefläche (7), wobei die starre Struktur ausgelegt ist zum Drehen bezüglich des zweiten Gelenkes (12), im Wesentlichen bezüglich eines Winkels (α) von 90°, wobei ein feststehender Anschlag (30) bereit gestellt ist zum Arretieren des Frontabschnittes (9) wenn die Sitzfläche (2) in der verschwenkten oder gefalteten Position vorliegt.

## Revendications

1. Véhicule motorisé avec un siège de second rang (1) possédant un dossier (3) et une surface d'assise (2) qui peuvent tous les deux être retournés, dans lequel ledit dossier (3) est conçu pour être incliné vers le bas autour d'une première articulation articulée (4) pour former une surface de repos (7), ladite première articulation articulée (4) étant supportée sur deux supports (5) du habitacle du véhicule motorisé ; et dans lequel ladite surface d'assise (2) comprend une partie avant (9) et une partie arrière (16), ladite surface d'assise (2) étant conçue pour être inclinée à partir d'une position distendue vers l'avant autour d'une seconde articulation (12) également supportée par ladite base (13, 14) et placée dans une position correspondant à ladite partie avant (9) ; ladite partie avant (9) et ladite partie arrière (16) étant articulées ensemble sur une articulation mobile (17) pour permettre à ladite surface d'assise (2) d'être pliée pour former un prolongement (18) de ladite surface de repos (7) lorsqu'elle inclinée ; **caractérisé en ce qu'**au moins une (9) desdites parties (9, 16) présente un creux (36) adapté pour loger un élément (41, 42) fixé à ladite base (14), ledit creux (36) s'étendant transversalement et comprenant un épaulement arrière (38) pourvu d'une encoche (39), ledit élément (41, 42) étant constitué par une barre transversale (41) possédant une bordure (42) faisant saillie vers l'arrière et conçue pour entrer en prise avec ladite encoche (39) afin d'empêcher un déplacement rotatif et un déplacement longitudinal de ladite surface d'assise (2) dans le cas d'un arrêt brusque du véhicule motorisé.

2. Véhicule avec un siège de second rang selon la revendication 1, dans lequel la surface inférieure dudit creux (36) est conçue pour s'arrêter verticalement contre ladite bordure (42) de ladite barre transversale (41) lorsque ladite surface d'assise (2) est dans ladite position distendue.

3. Véhicule avec un siège de second rang selon la revendication 1 ou 2, dans lequel lesdites parties (9, 16) possèdent des surfaces inférieures correspondantes (19, 26), la surface inférieure (19) d'au moins une (9) desdites parties (9, 16) étant pourvue dudit creux (36), ladite articulation mobile (17) étant placée dans une position correspondant auxdites surfaces inférieures (19, 26).

4. Véhicule avec un siège de second rang selon la revendication 3, dans lequel ledit prolongement (18) de la surface de repos (7) est constitué par deux surfaces transversales (21, 27), chacune supportée par une desdites parties (9, 16), ladite articulation mobile (17) étant placée dans une position correspondant à deux bords d'angle (31, 32), chacun formé par la surface inférieure (19, 26) et par la surface transversale (21, 27) de chacune desdites parties (9, 16).

5. Véhicule avec un siège de second rang selon la revendication 4, dans lequel ladite partie avant (9) est fixe par rapport à une structure rigide (11), et ladite seconde articulation fixe (12) est placée entre ladite structure rigide (11) et ladite base (13, 14), **caractérisé en ce que** lesdites surfaces transversales (21, 27) sont conçues pour s'accoupler l'une avec l'autre et sont sensiblement perpendiculaires auxdites surfaces inférieures (19, 26), ladite partie arrière (16) étant conçue pour tourner autour de ladite articulation mobile (17) de 180° par rapport à ladite partie avant (9).

6. Véhicule avec un siège de second rang selon la revendication 5, dans lequel ladite structure rigide (11) est dimensionnée selon la hauteur dudit dossier (3) et la largeur desdites surfaces transversales (21, 27) afin de permettre audit prolongement (18) de se placer de façon adjacente à ladite surface de repos (7), ladite structure rigide étant conçue pour tourner sur ladite seconde articulation (12) sensiblement selon un angle (α) de 90°, un arrêt fixe (30) étant prévu pour arrêter ladite partie avant (9) lorsque ladite surface d'assise (2) est dans la position pliée.
